Europäisches Patentamt

European Patent Office

Office européen des brevets

(11) Veröffentlichungsnummer: **0 008 998**
**A1**

## (12) EUROPÄISCHE PATENTANMELDUNG

(21) Anmeldenummer: 79710004.7

(22) Anmeldetag: 21.08.79

(51) Int. Cl.³: **G 06 K 7/08**
G 06 K 19/02, G 07 C 11/00

(30) Priorität: 05.09.78 DE 2838604

(43) Veröffentlichungstag der Anmeldung:
19.03.80 Patentblatt 80/6

(84) Benannte Vertragsstaaten:
AT BE CH FR GB IT LU NL SE

(71) Anmelder: Georg Hartmann KG Bau elektrischer Anlagen
Mercedesstrasse 17
D-7000 Stuttgart 50(DE)

(72) Erfinder: Hartmann, Hans
Emser Strasse 14
D-7000 Stuttgart 50(DE)

(74) Vertreter: Langosch, Hans, Dipl.-Ing. et al,
Patentanwälte Dipl.-Ing. Hans Langosch Dr.-Ing. Heinz Hosenthien Herdweg 62
D-7000 Stuttgart 1(DE)

(54) Elektromagnetische Lesevorrichtung für Identkarten.

(57) Bei einer elektromagnetischen Lesevorrichtung für Identkarten (1), bei der über mindestens einen Lesekopf (9) mittels Hallgenerator oder Feldplatte Daten von am Lesekopf (9) vorbeiführbaren oder anlegbaren Indentkarten (1) ablesbar sind, wird zur Erhöhung der Fälschungssicherheit vorgeschlagen, daß die Informationen der Identkarte (1) durch eine gelochte Metallplatte (2) hoher Permeabilität festgelegt werden, wobei die Metallplatte (2) durch eine Kunststoffumhüllung (4,4') geschützt ist und es ist weiter zum Lesen der Identkarte (1) auf einer Seite ein eine Reihe oder mehrere Reihen Lesköpfe (9) und durch einen Schlitz (8) getrennt jedem Lesekopf (9) gegenüberliegend ein Dauermagnet (10) oder ein Elektromagnet angeordnet. Durch die Verwendung der Metallplatte (2) mit sehr hoher Permeabilität ist es nicht möglich, beispielsweise mit Stahlplättchen oder anderen Metallen den Datenträger zu beeinflussen, wodurch eine hohe Fälschungssicherheit erreicht wird.

EP 0 008 998 A1

./...

Croydon Printing Company Ltd.

**Fig.1**

**Fig.3**

0008998

Anmelderin:

Firma
Georg Hartmann KG
Bau elektrischer Anlagen
Mercedesstr. 17
7000 Stuttgart 50

## Elektromagnetische Lesevorrichtung für Identkarten

Die Erfindung betrifft eine elektromagnetische Lesevorrichtung für Identkarten, bei der über mindestens einen Lesekopf mittels Hallgenerator oder Feldplatte Daten von am Lesekopf vorbeiführbaren oder anlegbaren Identkarten ablesbar sind.

Es sind solche Schreib-Lese-Systeme mit auf der Identkarte vorgesehener Magnetspur bekannt, welche mit
einem induktiven Schreib-Lese-Kopf beschriftet und
wieder abgelesen werden kann. Das Schreiben sowie
das Lesen kann nur in dynamischem Zustand erfolgen.
Zwischen dem Schreib-Lesekopf und der Magnetspur darf
nur ein sehr minimaler Luftspalt sein. Verschmutzungen
und Knicke beeinträchtigen den Schreib-Lesevorgang,
so daß das System sehr empfindlich gegen Umwelteinflüsse
wie Schmutz, mechanische Deformierung oder sonstige
Beschädigungen der Identkarte ist. Das System ist ferner
sehr empfindlich gegen Magnetfehler.

Ferner sind Lesesysteme mit magnetfeldabhängigen Halbleitern als Sensoren und fest eingeschweißten oder eingegossenen Magnetplatten in der Identkarten bekannt. Dieses
System hat infolge ihrer großen Streuung eine geringe
Bitdichte, so daß pro zur Verfügung stehender Fläche
nur wenige Informationen unterbringbar sind.

In Vermeidung der genannten Nachteile liegt der vorliegenden Erfindung die Aufgabe zugrunde, eine Vorrichtung
der eingangs genannten Art zu schaffen, die unempfindlich
gegen Schmutz und leichte Beschädigungen, insbesondere
Knicke der Identkarte ist, und bei der große Toleranzen
möglich sind, ohne daß die Funktionsfähigkeit und sicheres Funktionieren beeinträchtigt wird und die ferner eine große Sicherheit gegen Fälschungen aufweist.

Zur Lösung dieser Aufgabe sieht die Erfindung vor, daß die Informationen der Identkarte durch eine gelochte Metallplatte hoher Permeabilität festgelegt sind und daß diese Metallplatte durch eine Kunststoffummantelung geschützt ist, und daß ferner zum Lesen der Identkarte auf einer Seite ein, eine Reihe oder mehrere Reihen Leseköpfe und durch einen Schlitz getrennt, jedem Lesekopf gegenüberliegend, ein Dauermagnet oder ein Elektromagnet angeordnet ist.

Die Metallplatte muß eine sehr hohe Permeabilität aufweisen, um das Magnetfeld über den Leseköpfen abschirmen zu können. Materialien mit solchen Eigenschaften sind in der Regel handelsüblich nicht erhältlich, sondern müssen für den jeweiligen Zweck berechnet und hergestellt werden. Es ist daher nicht möglich, beispielsweise mit Stahlplättchen oder anderen Metallen den Datenträger zu beeinflussen, so daß eine hohe Fälschungssicherheit erreicht wird.

Dagegen könnten bei den bekannten induktiven Abtastverfahren, bei denen die Datenträger aus irgendeinem
beliebigen Metall bestehen, vom Anwender in beliebiger
Weise geändert werden, beispielsweise durch Abdecken
von Löchern mittels handelsüblicher Aluminiumfolie
od.dgl. Beim Anmeldegegenstand ist eine solche Verfälschung dagegen nicht möglich.

Zum Schutz der Metallplatte kann diese in Kunststoff
eingegossen oder zwischen zwei Kunststoffplatten eingeklebt oder eingeschweißt sein.

Zur Lagesicherung der Identkarte und auch zur Sicherstellung bei Mißbrauch oder bei Feststellung eines
Fehlers kann besonders vorteilhaft die Identkarte
einen Durchbruch aufweisen, in den ein vorzugsweise
durch einen Magneten gesteuerter Stift einführbar ist.
Die magnetische Steuerung des Stifts kann zweckmäßig
über eine Kontrollschaltung vollautomatisch erfolgen
und kann beispielsweise mit einer Waren- oder Kassenkontrolle gekoppelt sein, um eine Sicherstellung der
Identkarte zu gewährleisten, wenn Abweichungen von vorgegebenen Sollwerten festgestellt werden, oder wenn
beispielsweise durch eine elektronische Kontrolle festgestellt wird, daß zwei identische Identkarten in

- 5 -

Benutzung sind.

Weitere erfindungsgemäße Ausbildungen sind den Unteransprüchen zu entnehmen und werden mit ihren Vorteilen
in der nachfolgenden Beschreibung näher erläutert.

In den beigefügten Zeichnungen zeigt:

Fig. 1          eine Draufsicht auf eine
                aufgeklappte noch nicht verschweißte Identkarte,

Fig. 2          eine Schrägansicht einer elektromagnetischen Lesevorrichtung mit
                einer teilweise eingeschobenen
                Identkarte und

Fig. 3          einen Schnitt durch eine elektromagnetische Lesevorrichtung.

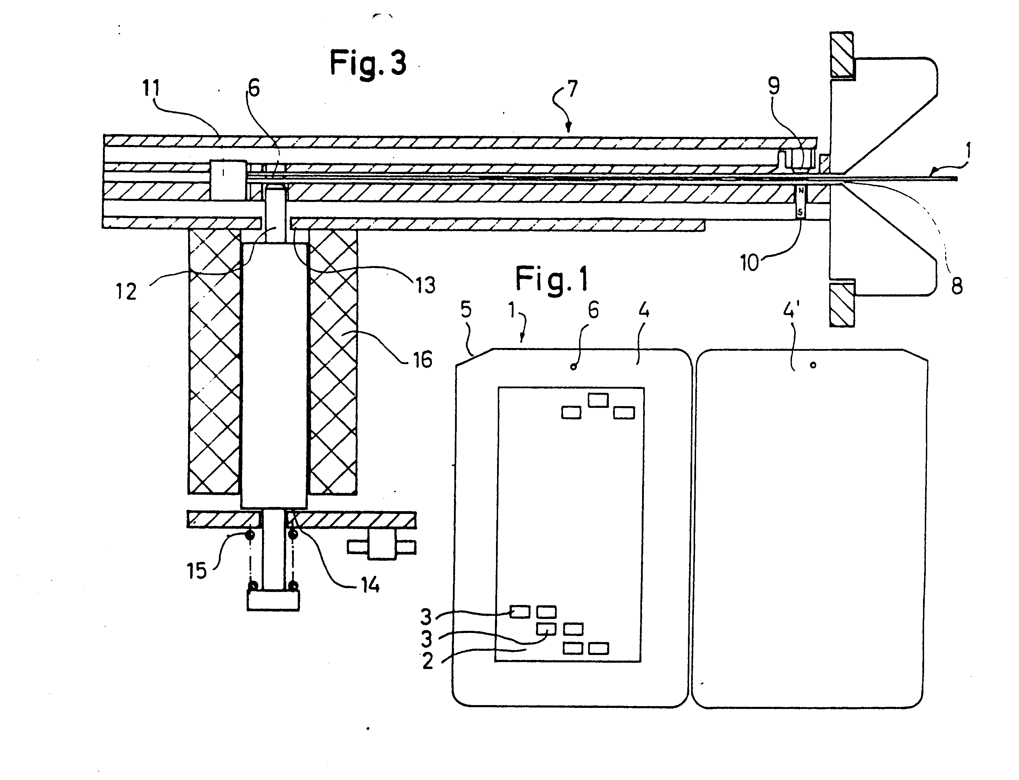

Die in halbfertigem Zustand in Fig. 1 dargestellte
Identkarte 1 besteht aus einer Metallplatte 2, die als
Informationsträger dient und hierzu mit Löchern 3 versehen ist. Zum Schutz der Metallplatte 2 ist diese
zwischen zwei aufgeklappt dargestellten Kunststoffplatten 4,4' geschützt angeordnet. Die Kunststoffplatten
4,4' können miteinander verschweißt oder verklebt sein.

Bei einer anderen nicht dargestellten Ausführungsform kann die Metallplatte 2 einfach in Kunststoff eingegossen sein.

Zur Sicherstellung einer seitenrichtigen Handhabung der Identkarte kann diese auf einer Seite mit einer Schräge 5 versehen sein. Weiter kann wie später bei der Beschreibung in Fig. 3 erwähnt, zur Sicherstellung der Identkarte bei mißbräuchlicher Benutzung noch ein Durchbruch 6 vorgesehen sein.

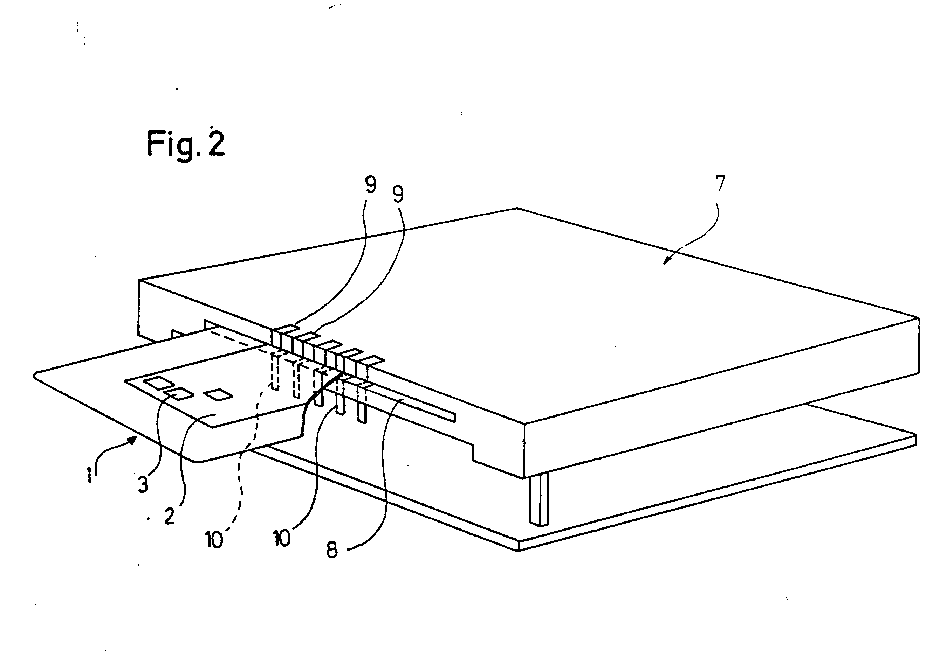

In Fig. 2 ist eine Lesevorrichtung 7 mit einer teilweise in einen Schlitz 8 eingeschobenen Identkarte 1 dargestellt. Auf der Oberseite des Schlitzes 8 sind entsprechend der fünfreihigen Anordnung der Löcher 3 in der Identkarte 1 fünf Leseköpfe 9 in Form von Hallgeneratoren oder Feldplatten angeordnet und ihnen ist genau gegenüberliegend im Schlitz 8 jeweils ein Permanentmagnet 10 vorgesehen. Die Wirkung dieser Permanentmagneten 10 kann nur zum Lesekopf 9 gelangen, wenn an der entsprechenden Stelle ein Durchbruch 3 in der Identkarte vorhanden ist. Um eine sichere Abschirmung der Leseköpfe 9 durch die Metallplatte 2 sicherzustellen, besteht diese aus einem Werkstoff sehr hoher Permeabilität.

In Fig. 3 ist ein Schnitt durch die in Fig. 2 dargestellte Lesevorrichtung 7 dargestellt, wobei bei
dieser Darstellung die Identkarte 1 bis zu einem Anschlag
11 in die Lesevorrichtung 7 eingeschoben ist. In der
eingeschobenen Lage kann in den Durchbruch 6 ein magnetisch
gesteuerter Stift 12 eingeschoben werden, um die Lage
der Identkarte genau zu fixieren. Diese kann aber
zugleich automatisch festgehalten werden, wenn ein
Mißbrauch, ein Fehler oder sonstiges festgestellt wird.
Bei angehobenem Stift 12 kann dann die Identkarte 1
nicht mehr aus der Lesevorrichtung 7 herausgezogen
werden. Der Stift 12 kann zwischen zwei Anschlägen 13,14
gegen die Wirkung einer Feder 15 durch die Wirkung
eines strombeaufschlagbaren Magneten 16 verschoben
werden.

Das Lesen der Identkarte 1 erfolgt schrittweise von
Reihe zu Reihe der Löcher 3 entweder beim Einschieben
der Identkarte 1 in den Schlitz 2 oder beim Herausziehen, wobei das Einschieben und Herausziehen von
Hand oder auch durch eine besondere Transportvorrichtung
erfolgen kann.

Anstelle von nur einer Reihe von Leseköpfen 9 und Magneten 10 können auch mehrere Reihen vorgesehen sein, so daß ein sektorenweises oder komplettes Ablesen der Identkarte auf einmal erfolgen kann.

Die Metallplatte 2 weist nur eine Dicke von etwa 0,1 mm auf bei einer Permeabilität von 8000.

0008998

- 1 -

Ansprüche

1. Elektromagnetische Lesevorrichtung für Identkarten (1), bei der über mindestens einen Lesekopf (9) mittels Hallgenerator oder Feldplatte Daten von am Lesekopf (9) vorbeiführbaren oder anlegbaren Identkarten (1) ablesbar sind, dadurch gekennzeichnet, daß die Informationen der Identkarte (1) durch eine gelochte Metallplatte (2) hoher Permeabilität festgelegt sind und diese Metallplatte 2 durch eine Kunststoffumhüllung geschützt ist und daß zum Lesen der Identkarte (1) auf einer Seite ein, eine Reihe oder mehrere Reihen Leseköpfe (9) und durch einen Schlitz (8) getrennt jedem Lesekopf (9) gegenüberliegend ein Dauermagnet (10) oder ein Elektromagnet angeordnet ist.

2. Lesevorrichtung nach Anspruch 1, dadurch gekennzeichnet, daß die Metallplatte (2) in Kunststoff eingegossen ist.

3. Lesevorrichtung nach Anspruch 1, dadurch gekennzeichnet, daß die Metallplatte (2) zwischen zwei Kunststoffplatten (4,4') eingeklebt oder eingeschweißt ist.

4. Lesevorrichtung nach einem der Ansprüche 1 bis 3, dadurch gekennzeichnet, daß die Identkarte (1) einen Durchbruch (6) aufweist, in den vorzugsweise durch einen Magneten (16) gesteuerter Stift (12) einführbar ist.

5. Lesevorrichtung nach Anspruch 4, dadurch gekennzeichnet, daß der Stift (12) zwischen zwei Anschlägen (13,14) gegen die Wirkung einer Feder (15) verschiebbar ist.

6. Lesevorrichtung nach einem der Ansprüche 1 bis 5, dadurch gekennzeichnet, daß die Metallplatte (2) eine Dicke von etwa 0,1 mm aufweist.

7. Lesevorrichtung nach einem der Ansprüche 1 bis 6, dadurch gekennzeichnet, daß die Metallplatte (2) eine Permeabilität von etwa 8000 aufweist.

Fig. 3

Fig. 1

Fig. 2

0008998

Europäisches
Patentamt

**EUROPÄISCHER RECHERCHENBERICHT**

Nummer der Anmeldung

EP 79 710 004.7

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| P,X | <u>DE - A1 - 2 747 585</u> (HARTMANN & LÄMMLE) <br> * Ansprüche 1, 6, 15, 16 * <br><br> -- | 1,3-5 |
| X | <u>US - A - 3 651 311</u> (BEREZIN et al.) <br> * Spalte 1 * <br><br> -- | 1 |
| X | <u>DE - B2 - 2 054 764</u> (DASY INTER S.A.) <br> * Anspruch 1 * <br><br> -- | 1,3 |
| A | <u>DE - A1 - 2 735 879</u> (ACCESS CONTROL <br> SYSTEMS PTY. LTD.) <br> * vollständiges Dokument * <br><br> ---- | |

**KLASSIFIKATION DER ANMELDUNG (Int.Cl.3)**

G 06 K 7/08
G 06 K 19/02
G 07 C 11/00

**RECHERCHIERTE SACHGEBIETE (Int. Cl.3)**

G 06 K 7/08
G 06 K 13/067
G 06 K 19/00
G 07 C 11/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

✗ Der vorliegende Recherchenbericht wurde für alle Patentansprüche erstellt.

| Recherchenort | Abschlußdatum der Recherche | Prüfer |
|---|---|---|
| Berlin | 13-12-1979 | ZOPF |

EPA form 1503.1 06.78